# EUROPÄISCHE PATENTSCHRIFT

(11) **EP 4 559 043 B1**
(45) Veröffentlichungstag und Bekanntmachung des Hinweises auf die Patenterteilung: **05.08.2026**
(21) Anmeldenummer: 23714653.5
(22) Anmeldetag: 21.03.2023
(51) Int. Cl.: H01M 10/613, H01M 10/625, H01M 10/647, H01M 10/6554, H01M 10/6556, H01M 50/204, F28D 1/03, B60L 58/26, F28F 3/12, H01M 50/209, H01M 50/103, H01M 10/643

(54) **LITHIUM-ZELLMODUL**
LITHIUM-ION CELL MODULE
MODULE DE PILE AU LITHIUM

(43) Veröffentlichungstag der Anmeldung: 28.05.2025
(73) Patentinhaber: HOPPECKE Systemtechnik GmbH, 08056 Zwickau (DE)
(72) Erfinder: REINHOLD, Stefan, 08058 Zwickau (DE); TRAPP, Magnus, 33181 Bad Wünnenberg (DE); RUMMEL, Chris Peter, 59929 Brilon (DE)
(74) Vertreter: Brinkmann, Stefan Ulrich
(86) Internationale Anmeldenummer: PCT/EP2023/057229
(87) Internationale Veröffentlichungsnummer: WO 2024/193817

(56) Entgegenhaltungen:
- EP-B1- 2 601 705
- DE-A1- 102019 118 356
- US-A1- 2023 036 195

## Beschreibung

Die Erfindung betrifft ein Lithium-Zellmodul mit einem Gehäuse und einer Mehrzahl von Lithiumzellen, die in Gehäuselängsrichtung in Reihe hintereinander innerhalb des Gehäuses angeordnet sind.

Ein gattungsgemäßes Lithium-Zellmodul verfügt über ein Gehäuse. Innerhalb des Gehäuses ist eine Mehrzahl von Lithiumzellen angeordnet, die elektrisch miteinander verschaltet sind. Typischerweise sind die Lithiumzellen in Gehäuselängsrichtung in Reihe hintereinander angeordnet, wobei mehrerer solcher Reihen vorgesehen sein können.

Lithium-Zellmodule der gattungsgemäßen Art finden insbesondere als Traktionsmodule für den Bahnverkehr Verwendung. Im Fokus stehen dabei insbesondere oberleitungsfreie Bahnstrecken, die mit rein elektrifizierten Zügen bedient werden, was einen Batteriebetrieb erforderlich macht.

Insbesondere als Traktionsmodule genutzte Lithium-Zellmodule bedürfen einer Modulkühlung, um einen bestimmungsgemäßen Modulbetrieb sicherzustellen und um einem möglichen Havariefall in Folge einer zu starken Wärmeentwicklung entgegenzuwirken. Aus dem Stand der Technik vorbekannte Lithium-Zellmodule verfügen deshalb über eine sogenannte Kühlplatte, die ebenso wie die Lithiumzellen vom Gehäuse aufgenommen ist. Die Kühlplatte kann fluiddurchströmt ausgebildet sein, zu welchem Zweck die Kühlplatte über entsprechend ausgebildete Kühlleitungen verfügt. Als Kühlmittel, d. h. als Kühlfluid kommt insbesondere Wasser zum Einsatz, das im bestimmungsgemäßen Verwendungsfall die kühlplattenseitigen Kühlleitungen durchströmt.

Eine Kühlung von Batteriezellen eines Traktionsbatteriemoduls für Fahrzeuge ist z.B. aus der EP 2 601 705 B1 bekannt. Dort sind Hohlprofile vorgesehen, die als Kühlpassagen dienen und in die Kühlplatten eingesetzt werden. Es sind somit Kühlfächer ausgebildet, in die je Fach eine Batteriezelle eingesetzt wird. Die Fächer und damit die Batteriezellen sind in Höhenrichtung übereinandergestapelt. Es können obere und untere Abschlussplatten vorgesehen sein.

Aus der DE 10 2019 118 356 A1 ist des Weiteren eine Kühlvorrichtung für Fahrzeugbatterien vorgesehen, bei der zwischen einem ersten planaren Element und einem zweiten planaren Element Kühlmittelkanäle und Kältemittelkanäle ausgebildet werden, wobei die Kühlmittelkanäle und die Kältemittelkanäle jeweils nebeneinander und abwechselnd ausgebildet sind. Es ist zu diesem Zweck ein drittes Element zwischen dem ersten und dem zweiten Element vorgesehen, das im Querschnitt eine Wellenform aufweist. Die Batteriemodule bzw. eine Vielzahl von Sekundärbatterien sind dabei auf dem ersten planaren Element angeordnet.

Zudem ist aus der US 2023/0036195 ein Batterie-Zellmodul bekannt, bei dem eine Vielzahl von Batteriezellen in Reihe hintereinander angeordnet sind. Zur Temperaturregulation ist ein Wärmeaustauschelement vorgesehen. Das Wärmeaustauschelement umfasst dabei eine einen Gehäuseboden bildende erste Platte und zwei die Seitenwände bildende zweite Platten. In der ersten Platte ist wenigstens ein Strömungskanal, durch den das Wärmeaustauschmittel fließt, ausgebildet. Das Wärmeaustauschelement wird dabei von einem Stützelement getragen.

Obgleich sich die vorbeschriebenen Konstruktionen im alltäglichen Praxiseinsatz bewährt haben, besteht Verbesserungsbedarf, insbesondere mit Blick auf eine vereinfachte und damit auch kostengünstigere Herstellung sowie einen kompakteren Aufbau. Es ist deshalb die **Aufgabe** der Erfindung, ein gattungsgemäßes Lithium-Zellmodul bereitzustellen, das konstruktiv eine vereinfachte und damit kostengünstigere Herstellung ermöglicht sowie einen kompakteren Aufbau.

Zur **Lösung** dieser Aufgabe wird ein Lithium-Zellmodul nach Anspruch 1 vorgeschlagen.

Das Gehäuse des Lithium-Zellmoduls verfügt über einen im Querschnitt u-förmig ausgebildeten Grundkörper. Dieser Grundkörper stellt einen Gehäuseboden einerseits und zwei daran angeordnete Seitenwände andererseits bereit. Im endmontierten Zustand nimmt der Grundkörper die Lithiumzellen des Lithium-Zellmoduls auf, wobei die Lithiumzellen in Längsrichtung der Seitenwände, d. h. in Gehäuselängsrichtung in Reihe hintereinander angeordnet sind.

Im endmontierten Zustand sind die Lithiumzellen vom Gehäuseboden des Grundkörpers aufgenommen, werden mithin von diesem getragen. Ein seitlicher Schutz der Lithiumzellen ist durch die am Gehäuseboden angeordneten Seitenwände gewährleistet.

In den Gehäuseboden ist ein in Gehäuselängsrichtung verlaufender Fluidkanal integriert. Dieser dient im bestimmungsgemäßen Verwendungsfall des Lithium-Zellmoduls als Kühlkanal und ist von einem als Kühlmittel dienenden Fluid durchströmt. Dabei besteht die Besonderheit insbesondere darin, dass der Fluidkanal in den Gehäuseboden des Grundkörpers integriert ist. Es ist damit auf ein separates Bauteil in der Ausgestaltung einer Kühlplatte vollends verzichtet. Die vorgenannte Ausgestaltung erweist sich insofern einfach im Aufbau, was eine vereinfachte und damit auch kostengünstigere Herstellung ermöglicht. Dabei ist insbesondere von Vorteil, dass die platz- und kostenoptimierte Integration des als Kühlkanal dienenden Fluidkanals in den Gehäuseboden des Grundkörpers die zusätzliche Montage einer separaten Kühlplatte überflüssig macht.

Ein weiterer Vorteil der vorgenannten Ausgestaltung ist die konstruktionsbedingt optimierte Kühlung im bestimmungsgemäßen Betriebsfall. Denn die thermischen Übergänge zwischen Kühlplatte und Gehäuse sind eliminiert und es ist durch die integrative Ausgestaltung des Fluidkanals ein insgesamt gekühlter Grundkörper gegeben, welcher einen optimierten Wärmeabfluss aus den Lithiumzellen über drei Gehäuseseiten ermöglicht, nämlich über den Gehäuseboden einerseits und die beiden daran angeordneten Seitenwände andererseits. Dieser optimierte Wärmeabfluss sorgt insgesamt für eine effizientere Kühlung der Lithiumzellen, was bei gleichzeitig verbesserter Lebensdauer einen optimierten Betrieb des Lithium-Zellmoduls ermöglicht.

Gemäß einem weiteren Merkmal ist vorgesehen, dass in den Gehäuseboden ein weiterer in Gehäuselängsrichtung verlaufender Fluidkanal integriert ist.

Der Gehäuseboden verfügt über mehrere Fluidkanäle, beispielsweise zwei, drei oder noch mehr Fluidkanäle, die jeweils in Gehäuselängsrichtung verlaufen, d. h. parallel zueinander ausgerichtet sind. Dabei sind die Fluidkanäle in Gehäusequerrichtung vorzugsweise abstandsgleich zueinander ausgebildet.

Es ist in diesem Zusammenhang erfindungsgemäß vorgesehen je Reihe an Lithiumzellen einen Fluidkanal vorzusehen. Demnach ist einer Reihe von hintereinander angeordneten Lithiumzellen ein Fluidkanal zugeordnet. Bei mehreren Reihen von jeweils in Längsrichtung hintereinander angeordneten Lithiumzellen sind der Anzahl der Reihen entsprechend viele Fluidkanäle vorgesehen, sodass jeder Reihe von Lithiumzellen ein Fluidkanal zugeordnet ist. Im Ergebnis ist so eine optimierte Kühlung der Lithiumzellen sichergestellt.

Gemäß einem weiteren Merkmal ist vorgesehen, dass in den Gehäuseboden ein die Fluidkanäle strömungstechnisch miteinander verbindender Querkanal integriert ist. Es ist so strömungstechnisch ein geschlossenes Kanalsystem gegeben, wobei im bestimmungsgemäßen Verwendungsfall Fluid von Fluidkanal zu Fluidkanal strömen kann, und zwar durch die Querkanäle, mittels welcher die Fluidkanäle strömungstechnisch miteinander gekoppelt sind. Im einfachsten Ausführungsfall sind zwei parallel verlaufende Fluidkanäle vorgesehen, die über einen gemeinsamen Querkanal strömungstechnisch miteinander gekoppelt sind. In diesem Fall kann über den einen Fluidkanal zugeführtes Fluid über den Querkanal in den anderen Fluidkanal überführt werden und umgekehrt.

Gemäß einem weiteren Merkmal ist vorgesehen, dass ein Kanal eine im Querschnitt u-förmig ausgebildete Kanalnut und eine die offene Längsseite der Kanalnut verschließende Abdeckung aufweist.

Gemäß des vorgenannten Merkmals ist ein Kanal durch eine verschlossene Kanalnut gebildet. Die Kanalnut selbst ist im Querschnitt vorzugsweise u-förmig ausgebildet. Auch andere geometrische Ausgestaltungen sind natürlich denkbar. Dabei ist die Kanalnut unabhängig von ihrer geometrischen Ausgestaltung entlang einer ihrer Längsseiten offen ausgebildet. Diese offene Längsseite ist zur Ausbildung eines Kanals verschlossen ausgebildet, zu welchem Zweck eine Kanalnutabdeckung zum Einsatz kommt. Im endmontierten Zustand ist eine Kanalnut durch ihre Abdeckung fluiddicht verschlossen, wodurch ein in den Gehäuseboden des Grundkörpers integrierter Kanal ausgebildet ist.

Die Kanalausgestaltung mittels einer verschlossen ausgebildeten Kanalnut erweist sich besonders einfach und damit auch kostengünstig in der Herstellung. Dabei ist es bevorzugt, in einem ersten Herstellungsschritt die Kanalnut einstückig in den Grundkörper einzubringen. Alsdann ist in einem zweiten Herstellungsschritt nur noch vorgesehen, die offene Seite der Kanalnut zu verschließen, sodass im Ergebnis ein Kanal steht, sei es ein Fluidkanal oder ein Querkanal.

Gemäß einem weiteren Merkmal ist vorgesehen, dass der Grundkörper ein Biegeblechteil ist.

Gemäß einer ersten Alternative ist der Grundkörper aus einem Blechteil gebildet, beispielsweise einer Blechtafel oder -platte. Diese wird zur Ausbildung des Grundkörpers durch Biegen umgeformt. Im Ergebnis ist der Grundkörper als Biegeblechteil ausgebildet.

Die Ausbildung des Grundkörpers als Blechbiegeteil hat insbesondere den Vorteil einer vereinfachten und kostengünstigen Herstellung. Denn durch einfaches Umformen einer Blechtafel durch Biegen können sowohl die zum Gehäuseboden abgewinkelten Seitenwände ausgebildet als auch Kanalnuten in den Gehäuseboden eingebracht werden.

Gemäß einem weiteren Merkmal ist vorgesehen, dass der Grundkörper ein stranggepresstes Profil ist.

Gemäß dieser alternativen Ausgestaltung ist der Grundkörper durch ein stranggepresstes Profil gebildet. Auch diese Art der Herstellung des Grundkörpers ist einfach und damit kostengünstig. Zudem kann in einem Arbeitsschritt ein einstückig ausgebildeter Grundkörper hergestellt werden, der in schon vorbeschriebener Weise über einen Gehäuseboden, zwei daran angeordnete Seitenwände sowie über in den Gehäuseboden eingebrachte Kanalnuten verfügt.

Gemäß einem weiteren Merkmal ist vorgesehen, dass eine Kanalnut durch Fräsen ausgebildet ist.

Gemäß dieser Alternative erfolgt eine Ausbildung einer Kanalnut durch Fräsen. Dabei kann der Grundkörper als Biegeteil oder als stranggepresstes Profil oder sonst wie ausgebildet sein, allerdings ohne gehäusebodenseitige Kanalnuten. Diese werden separat ausgebildet, vorzugsweise durch Fräsen.

Das Ausbilden einer Kanalnut durch Fräsen hat insbesondere den Vorteil, dass es in einfacher Weise ermöglicht ist, eine erfindungsgemäße Kanalnut auszubilden, die abdeckseitig einen Absatz aufweist. Die Kanalnut weist insofern im Querschnitt eine treppenförmige Ausgestaltung aus. Dabei dient der Absatz im Weiteren dazu, eine Kanalnutabdeckung aufzunehmen, die dann im endmontierten Zustand formschlüssig in die Absatzausgestaltung eingreift. Dabei ist bei dieser Konstruktion von besonderem Vorteil, dass der Gehäuseboden auf seiner den Lithiumzellen abgewandten Unterseite eben ausgebildet ist. Denn die Nutabdeckungen sind jeweils in der durch die Absatzausgestaltung ausgebildeten Nutverbreiterung angeordnet.

Gemäß einem weiteren Merkmal der Erfindung ist vorgesehen, dass die Abdeckung eine korrespondierend zur zu verschließenden Kanalnut ausgebildete Leiste ist. Diese Leiste ist im endmontierten Zustand in die in Folge der Absatzausgestaltung ausgebildete Nutverbreiterung eingesetzt, wodurch einerseits die Kanalnut verschlossen ist und andererseits ein bündiger Abschluss mit der den Lithiumzellen gegenüberliegenden Unterseite des Gehäusebodens erreicht ist. Zwecks einer dauerhaften Verbindung der Abdeckung mit dem Gehäuseboden kann die Abdeckung mit dem Gehäuseboden insbesondere stoffschlüssig beispielsweise durch Schweißen oder quasi formschlüssig, beispielsweise durch Kleben verbunden sein. Auch andere Arten der Verbindung von Abdeckung und Gehäuseboden sind natürlich denkbar.

Gemäß einer alternativen Ausführung, die nicht Teil der Erfindung ist, ist vorgesehen, dass die Abdeckung eine Mehrzahl von Kanalnuten gemeinschaftlich verschließende Platte ist.

Gemäß dieser Alternative ist der Gehäuseboden quasi aufgedoppelt. Es kommt zu diesem Zweck eine Platte zum Einsatz, die auf der den Lithiumzellen gegenüberliegenden Unterseite des Gehäusebodens angeordnet ist. Hierdurch werden die gehäusebodenseitig vorgesehenen Kanalnuten verschlossen, wobei die Platte gemeinschaftlich sämtliche Kanalnuten abdeckt. Zwecks dauerhafter Verbindung von Grundkörper und Platte, können der Grundkörper und die Platte miteinander verschweißt, verklebt oder sonst wie verbunden sein.

Gemäß einem weiteren Merkmal der Erfindung ist vorgesehen, dass die Kanalnuten in die den Lithiumzellen abgewandte Großseite, d. h. Unterseite des Grundkörpers eingebracht sind. Alternativ kann auch die den Lithiumzellen zugewandte Großseite, d. h. Oberseite des Grundkörpers mit Längsnuten ausgestattet sein. Erfindungsgemäß ist allerdings die Unterseite mit entsprechenden Kanalnuten auszurüsten, sodass lithiumzellenseitig eine durchgehende, d. h. unterbrechungsfreie und ebene Oberfläche geschaffen ist, auf der die Lithiumzellen zwecks optimierter Wärmeabfuhr aufliegen. Es kann auch eine kombinierte Ausgestaltung vorgesehen sein, wonach Kanalnuten sowohl in die abgewandte Großseite als auch in die zugewandte Großseite eingebracht sind. So kann insbesondere vorgesehen sein, Kanalnuten zur Ausbildung von Fluidkanälen auf der den Lithiumzellen abgewandten Großseite auszubilden, wohin Kanalnuten zur Ausbildung von Querkanälen in die den Lithiumzellen zugewandte Großseite eingebracht sind.

Gemäß einem weiteren Merkmal der Erfindung ist vorgesehen, dass die den Lithiumzellen zugewandte Großseite, d. h. Oberseite des Grundkörpers und/oder die den Lithiumzellen abgewandte Großseite, d. h. Unterseite des Grundkörpers eben ausgebildet ist. Eine solche ebene Ausgestaltung der Großseiten ermöglicht einen optimierten Wärmeübergang und stellt zudem eine spaltfreie Aufnahme der Lithiumzellen durch den Grundkörper einerseits und eine verbesserte Stapelbarkeit mehrerer Lithium-Zellmodule übereinander andererseits sicher.

Gemäß einem weiteren Merkmal der Erfindung ist vorgesehen, dass ein Fluidkanal in strömungstechnischer Verbindung mit einem Fluidzulauf- und/oder einem Fluidablaufanschluss steht.

Über den Fluidzulaufanschluss wird dem Fluidkanal im bestimmungsgemäßen Verwendungsfall als Fluid ein Kühlmittel, beispielsweise Wasser aufgegeben. Dieses verlässt nach einem Passieren des Fluidkanals denselben über den dafür vorgesehenen Fluidablaufanschluss.

Bevorzugter Weise ist ein Grundkörper mit mehreren Fluidkanälen und/oder Querkanälen ausgerüstet, die ein Kanalsystem ausbilden. Dieses Kanalsystem ist an die Fluidzulauf- bzw. ablaufanschlüsse angeschlossen. Zu diesem Zweck kann beispielsweise vorgesehen sein, dass ein erster Fluidkanal mit einem Fluidzulaufanschluss ausgerüstet ist, wobei ein anderer Fluidkanal den Fluidablaufanschluss bereitstellt. Die beiden Fluidkanäle sind über einen Querkanal strömungstechnisch miteinander verbunden, sodass im Ergebnis dem Fluidsystem über den einen Fluidkanal Kühlmittel aufgegeben werden kann, was nach einem Passieren des Fluidsystems selbiges über den anderen Fluidkanal dank des davon bereitgestellten Fluidablaufanschlusses verlässt.

Wenn im bestimmungsgemäßen Anwendungsfall eine Mehrzahl von erfindungsgemäßen Lithium-Zellmodulen zum Einsatz kommt, so werden diese gleichsam mit Kühlmittel versorgt, womit eine parallele Beschickung der Zellmodule mit Kühlmittel stattfindet. Es wird so sichergestellt, dass sämtliche Zellmodule gleichsam abgekühlt werden. Eine solche gleichsame Abkühlung lässt sich indes nicht erreichen, wenn die Fluidsysteme der einzelnen Zellmodule hintereinandergeschaltet sind.

Gemäß einem weiteren Merkmal ist vorgesehen, dass das Gehäuse Endplatten aufweist, die den Grundkörper stirnseitig verschließen, wobei zwischen zwei Endplatten eine Reihe von in Gehäuselängsrichtung hintereinander angeordneten Lithiumzellen positioniert ist.

Für einen stirnseitigen Verschluss des im Querschnitt u-förmig ausgebildeten Grundkörpers kommen Endplatten zum Einsatz. Dabei ist je Stirnseite des Grundkörpers eine Endplatte vorgesehen. Im endmontierten Zustand ist der Grundkörper durch die beiden Endplatten stirnseitig verschlossen.

Die beiden Endplatten nehmen im endmontierten Zustand die zu einer Reihe hintereinander angeordneten Lithiumzellen auf. Dabei dienen die Endplatten als Widerlager für die Lithiumzellen und sorgen für eine eingespannte Anordnung der Lithiumzellen zwischen den Endplatten. Dabei stützen sich die Endplatten ihrerseits am Grundkörper ab, was einen entsprechenden Kraftfluss zwischen den Endplatten über den Grundkörper ermöglicht. Eine sichere Positionierung der Lithiumzellen innerhalb des Grundkörpers ist so sichergestellt. Weiterhin wird mit den Endplatten der Zellstapel definiert verpresst, um so eine längere Lebensdauer der Zellen zu gewährleisten.

Gemäß einem weiteren Merkmal der Erfindung ist vorgesehen, dass das Gehäuse einen lösbar am Grundkörper angeordneten Deckel aufweist. Der Deckel dient im endmontierten Zustand einer polseitigen Abdeckung der Lithiumzellen. Im endmontierten Zustand sind die Lithiumzellen mithin vollständig vom Gehäuse eingehaust. Dabei ist der Deckel lösbar am Gehäusegrundkörper angeordnet, was einen wahlweisen Zugriff auf die Lithiumzellen in vorteilhafter Weise ermöglicht.

Weitere Merkmale und Vorteile der Erfindung ergeben sich aus der nachfolgenden Beschreibung anhand der Figuren. Dabei zeigen
- Fig. 1: in schematisch perspektivischer Ansicht ein erfindungsgemäßes Lithium-Zellmodul;
- Fig. 2: in einer schematisch perspektivischen Ansicht von unten das Lithium-Zellmodul nach Figur 1, und zwar mit noch nicht verschlossenen Kanalnuten;
- Fig. 3: in schematisch perspektivischer Ansicht das Lithium-Zellmodul nach Fig. 2, und dies mit geschlossenen Kanalnuten;
- Fig. 4: in schematisch perspektivischer Ansicht ein erfindungsgemäßes Lithium-Zellmodul gemäß einer zweiten Ausführungsform;
- Fig. 5: in schematisch perspektivischer Ansicht von unten das Lithium-Zellmodul nach Fig. 4 und
- Fig. 6: in schematischer perspektivischer Ansicht der Grundkörper des Lithium-Zellmoduls nach den Figuren 4 und 5.

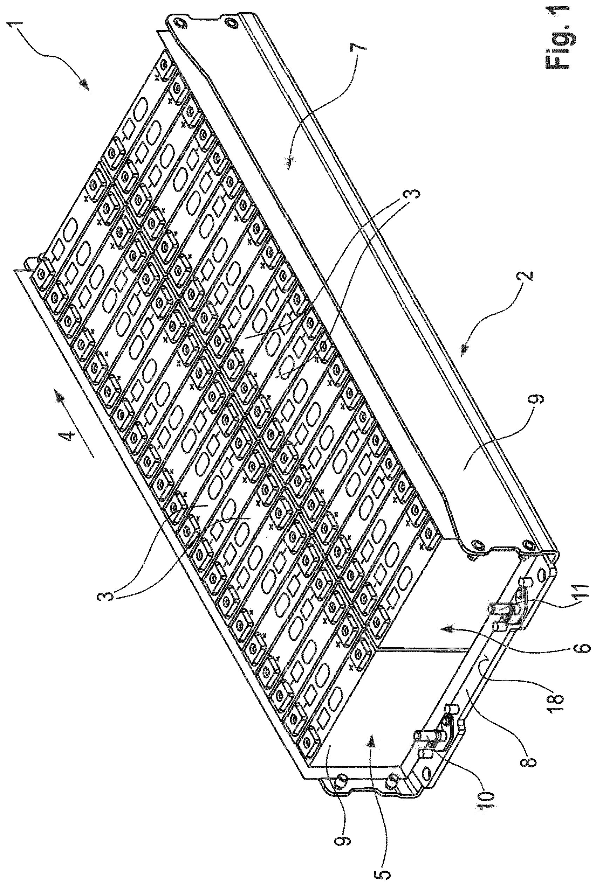

Fig. 1 lässt in schematisch perspektivischer Ansicht von oben ein erfindungsgemäßes Lithium-Zellmodul 1 erkennen.

Das Lithium-Zellmodul 1 verfügt über ein Gehäuse 2 und über eine Mehrzahl von Lithiumzellen 3, die innerhalb des Gehäuses 2 angeordnet sind. Wie die Darstellung nach Fig. 1 erkennen lässt, sind die Lithiumzellen 3 in Gehäuselängsrichtung 4 in Reihe hintereinander angeordnet. Dabei nimmt das Gehäuse 2 im dargestellten Ausführungsbeispiel zwei Reihen von Lithiumzellen 3 auf, nämlich eine erste Zellenreihe 5 und eine zweite Zellenreihe 6.

Das Gehäuse 2 weist einen Grundkörper 7 auf. Dieser ist im Querschnitt u-förmig ausgebildet und verfügt über einen Gehäuseboden 8 sowie zwei daran angeordnete Seitenwände 9. Im endmontierten Zustand sind die offenen Stirnseiten des Grundkörpers 7 durch in den Figuren nicht näher dargestellte Endplatten verschlossen. Dabei nehmen die Endplatten die Zellreihen 5 und 6 zwischen sich auf. Des Weiteren verfügt das Gehäuse 2 über einen ebenfalls in den Figuren nicht näher dargestellten Deckel. Dieser ist vorzugsweise auswechselbar am Grundkörper 7 angeordnet und deckt die Lithiumzellen 3 polseitig ab.

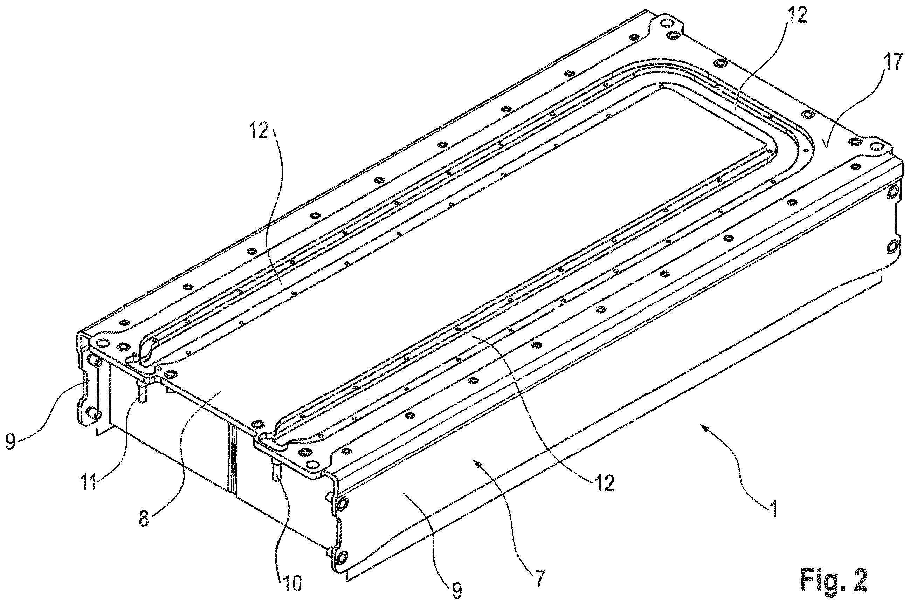

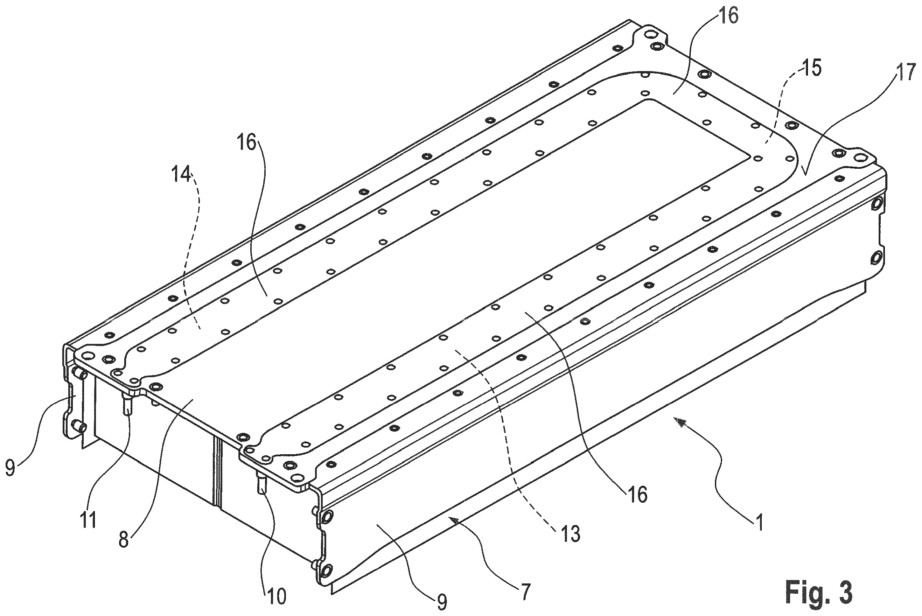

In den Gehäuseboden 8 des Grundkörpers 7 ist erfindungsgemäß ein in Gehäuselängsrichtung 4 verlaufender Fluidkanal 13 bzw. 14 integriert. Dieser Fluidkanal 13 bzw. 14 dient im bestimmungsgemäßen Verwendungsfall als Kühlkanal, durch den hindurch ein Kühlmittel geführt ist, bei dem es sich beispielsweise um Wasser handeln kann. Die Ausbildung des Fluidkanals 13 bzw. 14 ergibt sich insbesondere aus den Darstellungen nach den Figuren 2 und 3.

Gemäß dem in den Figuren dargestellten Ausführungsbeispiel sind in den Gehäuseboden 8 des Grundkörpers 7 zwei Fluidkanäle 13 und 14 integriert. Es ist ferner ein in den Gehäuseboden 8 integrierter Querkanal 15 vorgesehen, der die beiden Fluidkanäle 13 und 14 strömungstechnisch miteinander verbindet. Dieser Sachzusammenhang ergibt sich insbesondere aus der Darstellung nach Figur 3.

Wie eine Zusammenschau insbesondere der Figuren 1 und 3 erkennen lässt, ist der Fluidkanal 13 an einen Fluidzulaufanschluss 10 angeschlossen. Der Fluidkanal 14 steht indes mit einem Fluidablaufanschluss 11 in strömungstechnischer Verbindung. Im bestimmungsgemäßen Verwendungsfall kann dem Fluidzulaufanschluss 10 ein Kühlmittel aufgegeben werden, das den Fluidkanal 13, den Querkanal 15 und alsdann den Fluidkanal 14 bis zum Fluidablaufanschluss 11 durchströmt. Über den Fluidablaufanschluss 11 verlässt das Kühlmittel dann das aus den Fluidkanälen 13 und 14 sowie dem Querkanal 15 gebildeten Kanalsystem.

Zur Ausbildung der Kanäle 13, 14 und 15 ist der Gehäuseboden 8 auf seiner den Lithiumzellen 3 abgewandten Großseite 17, d. h. der Unterseite mit Kanalnuten 12 ausgerüstet, was insbesondere die Darstellung nach Fig. 2 erkennen lässt. Diese Kanalnuten 12 sind im endmontierten Zustand mittels entsprechender Abdeckungen 16 verschlossen, und zwar fluiddicht, infolgedessen die schon vorbeschriebenen Fluidkanäle 13 und 14 bzw. der Querkanal 15 ausgebildet sind.

Die Kanalnuten 12 können beispielsweise durch Fräsen ausgebildet sein. Alternativ können die Kanalnuten 12 durch Umformung des Grundkörpers 7 ausgebildet sein, beispielsweise durch Biegen, Stanzen und/oder dergleichen. Alternativ kann der Gehäuseboden 8 als Strangpressteil ausgebildet sein und die Kanalnuten 12 einstückig bereitstellen. Aus Gründen einer vereinfachten und preisgünstigen Herstellung ist eine Kombination der vorgenannten Alternativen bevorzugt. So kann der Grundkörper 7 beispielsweise als Biegeblechteil ausgebildet sein, wobei die Kanalnuten 12 für die späteren Fluidkanäle 13 und 14 mittels Biegen ausgebildet sind. Die Kanalnut 12 für den späteren Querkanal 15 ist indes durch Fräsen ausgebildet.

Im gezeigten Ausführungsbeispiel dienen zur Abdeckung der Kanalnuten 12 jeweils leistenförmige Abdeckung 16, wobei je Kanalnut 12 eine zugehörige Abdeckung 16 vorgesehen ist. Die Abdeckungen 16 können auch einstückig ausgebildet sein, wie in Figur 3 gezeigt. Im endmontierten Zustand ist die den Lithiumzellen 3 gegenüberliegende Großseite 17 des Gehäusebodens 8 eben ausgebildet. Dies ist konstruktiv dadurch erreicht, dass jede Kanalnut 12 nutöffnungsseitig mit in Längsrichtung verlaufenden Absatzkanten ausgerüstet ist. Die Aufnahmenuten 12 sind mithin aufgrund der Absatzausgestaltung nutöffnungsseitig in Querrichtung verbreitert ausgebildet. Im endmontierten Zustand kommt die je Kanalnut 12 vorgesehene Abdeckleiste 16 in dieser Verbreiterung zu liegen, wobei sie sich an den Absatzkanten abstützt. Dabei weisen die Absatzkanten in Höhenrichtung eine geometrische Ausgestaltung aus, die der Dicke einer Abdeckung 16 entspricht. Im Ergebnis sind die Abdeckungen 16 so formschlüssig aufgenommen, und zwar derart, dass sie flächenbündig mit der vom Gehäuseboden 8 bereitgestellten Großfläche 17 abschließen.

Auch die den Lithiumzellen 3 zugewandte Großfläche 18 des Gehäusebodens 8 ist eben ausgebildet, sodass die Lithiumzellen 3 vollflächig auf dieser Großseite 18 im endmontierten Zustand aufliegen. Da die Kanalnuten 12 auf der den Lithiumzellen 3 abgewandten Großseite 17 ausgebildet sind, ergibt sich im Übrigen für die den Lithiumzellen 3 zugewandte Großseite 18 eine unterbrechungsfreie Ausgestaltung, was einen optimierten Wärmeübergang von den Lithiumzellen 3 in den Grundkörper 7 gestattet.

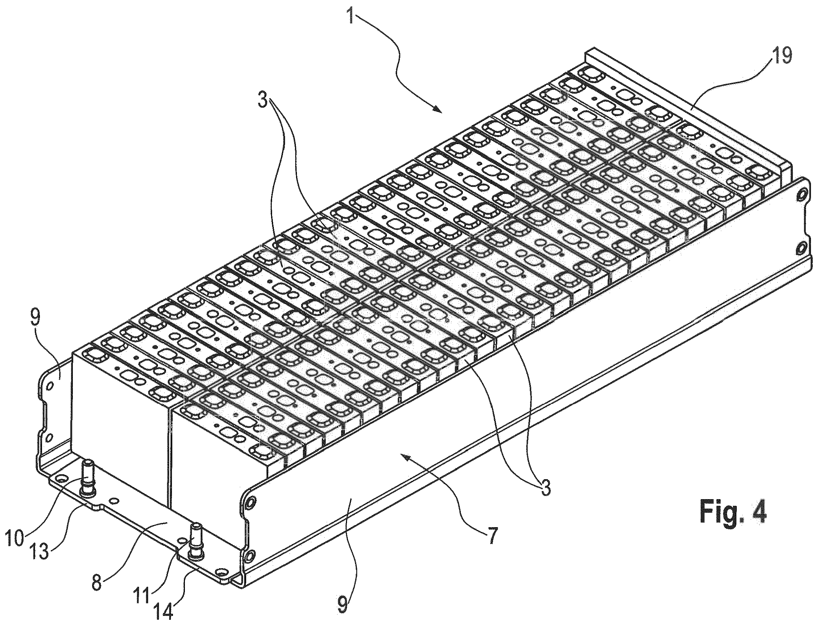

Die Figuren 4, 5 und 6 lassen eine alternative Ausführungsform eines erfindungsgemäßen Lithium-Zellmoduls 1 erkennen.

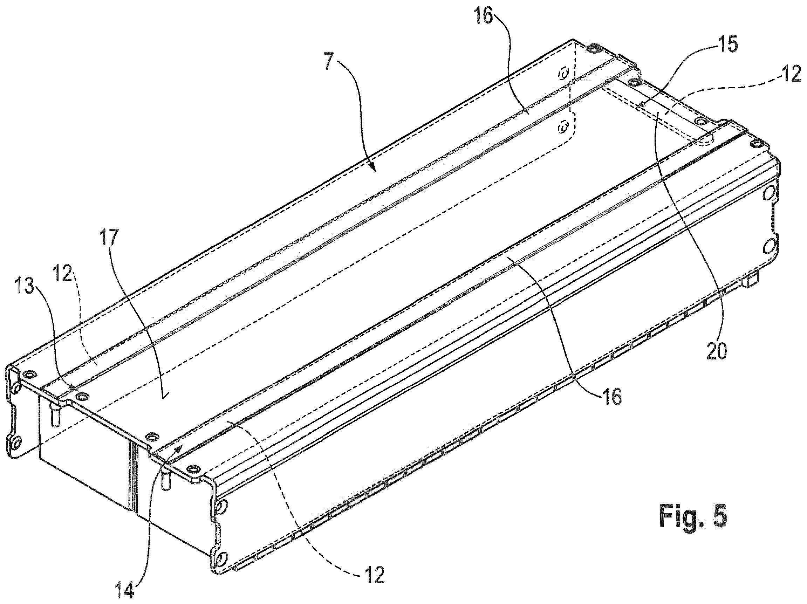

Der Grundkörper 7 des Gehäuses 2 des Lithium-Zellmoduls 1 nach den Figuren 4 bis 6 ist als stranggepresstes Profil ausgebildet. Die Kanalnuten 12 für die Fluidkanäle 13 und 14 sind einstückig in den Gehäuseboden 8 des Grundkörpers 7 eingeprägt. Dabei sind die Kanalnuten 12 der Fluidkanäle 13 und 14 in die den Lithium-Zellen 3 abgewandte Großseite 17, d.h. Unterseite des Grundkörpers 7 eingebracht, wie sich insbesondere aus Fig. 5 ergibt. Zum Verschluss der Kanalnuten 12 sind entsprechend ausgebildete Abdeckungen 16 in Form von Leisten vorgesehen, die die Kanalnuten 12 der Fluidkanäle 13 und 14 verschließen. Stirnseitig sind die Fluidkanäle 13 und 14 ebenfalls verschlossen ausgebildet, beispielsweise durch Schweißen. Eine Kühlmittelzufuhr bzw. -abfuhr erfolgt in schon vorbeschriebener Weise über die Fluidzulaufanschlüsse 10 und 11, wie sich dies beispielsweise aus Fig. 4 ergibt. Den Fluidzulauf- bzw. -ablaufanschlüssen 10 und 11 gegenüberliegend ist ein die Fluidkanäle 13 und 14 strömungstechnisch miteinander verbindender Querkanal 15 vorgesehen. Dieser ist durch eine mittels einer Abdeckung 16 verschlossenen Kanalnut 12 gebildet.

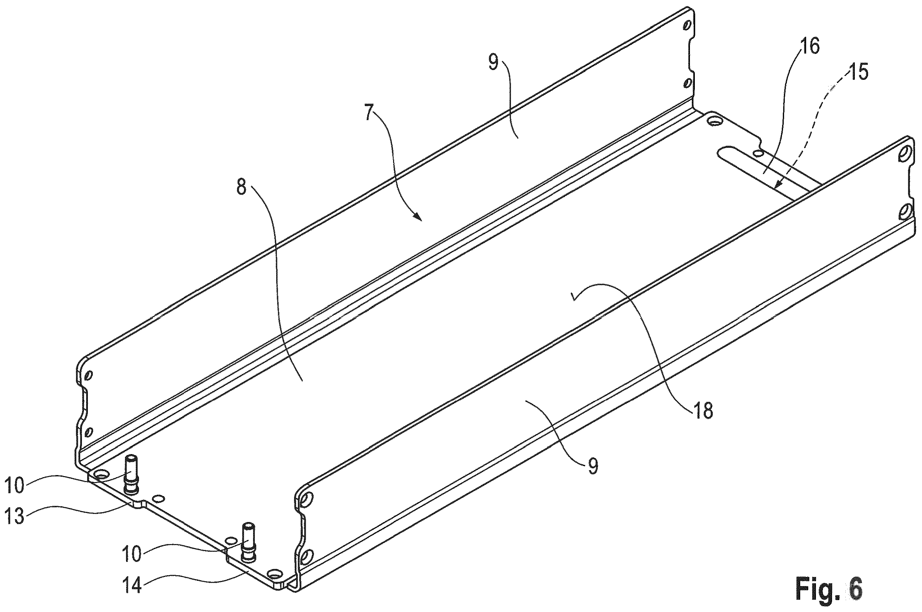

Die Kanalnut 12 des Querkanals 15 ist durch Fräsen ausgebildet. Dabei ist die den Querkanal 15 ausbildende Kanalnut 12 in die den Lithiumzellen 3 zugewandte Großseite 18, d.h. Oberseite des Grundkörpers 7 eingebracht, wie sich dies aus einer Zusammenschau der Figuren 5 und 6 ergibt. Der oberseitige Verschluss der den Querkanal 15 bildenden Kanalnut 12 ist durch eine Abdeckung 16 in Form einer Leiste gegeben, die sich auf einem durch Fräsen ausgebildeten Absatz 20 abstützt. Dieser Absatz 20 ergibt sich insbesondere aus der Darstellung nach Fig. 5.

Der Grundkörper 7 ist im endmontierten Zustand stirnseitig mittels entsprechender Endplatten verschlossen, wobei Fig. 4 beispielhaft die gemäß der Zeichnungsebene nach Fig. 4 hintere Endplatte 19 erkennen lässt.

### Bezugszeichen

- 1: Lithium-Zellmodul
- 2: Gehäuse
- 3: Lithiumzelle
- 4: Gehäuselängsrichtung
- 5: Zellenreihe
- 6: Zellenreihe
- 7: Grundkörper
- 8: Gehäuseboden
- 9: Seitenwand
- 10: Fluidzulaufanschluss
- 11: Fluidablaufanschluss
- 12: Kanalnut
- 13: Fluidkanal
- 14: Fluidkanal
- 15: Querkanal
- 16: Abdeckung
- 17: Großseite
- 18: Großseite
- 19: Endplatte
- 20: Absatz

## Patentansprüche

1. Lithium-Zellmodul mit einem Gehäuse (2) und einer Mehrzahl von Lithiumzellen (3), die in Gehäuselängsrichtung (4) in Reihe hintereinander innerhalb des Gehäuses (2) angeordnet sind, wobei das Gehäuse (2) eine erste Zellenreihe (5) und eine zweite Zellenreihe (6) aufnimmt, wobei das Gehäuse (2) einen im Querschnitt u-förmig ausgebildeten Grundkörper (7) aufweist, der einen Gehäuseboden (8) und zwei daran angeordnete Seitenwände (9) bereitstellt, wobei die offenen Stirnseiten des Grundkörpers (7) durch Endplatten (19) verschlossen sind, die die Zellenreihen (5, 6) zwischen sich aufnehmen, **dadurch gekennzeichnet, dass** je Zellenreihe (5, 6) in den Gehäuseboden (8) ein in Gehäuselängsrichtung (4) verlaufender Fluidkanal (13, 14) integriert ist, wobei der Gehäuseboden (9) zur Ausbildung der Fluidkanäle (13, 14) auf seiner den Lithiumzellen (3) abgewandten Großseite (17) mit Kanalnuten (12) ausgerüstet ist, die mittels entsprechender Abdeckungen (16) fluiddicht verschlossen sind, wobei eine Abdeckung (16) eine korrespondierend zur zu verschließenden Kanalnut (12) ausgebildete Leiste ist, wobei jede Kanalnut (12) nutöffnungsseitig mit in Längsrichtung verlaufenden Absatzkanten ausgerüstet ist, womit die Kanalnuten (12) nutöffnungsseitig in Querrichtung verbreitert ausgebildet sind, wobei die je Kanalnut (12) vorgesehene Abdeckung (16) in dieser Verbreiterung zu liegen kommt und sich an den Absatzkanten abstützt, wobei die Absatzkanten in Höhenrichtung eine geometrische Ausgestaltung aufweisen, die der Dicke der Abdeckung (16) entspricht.

2. Lithium-Zellmodul nach Anspruch 1, **dadurch gekennzeichnet, dass** in den Gehäuseboden (8) ein die beiden Fluidkanäle (13, 14) strömungstechnisch miteinander verbindender Querkanal (15) integriert ist.

3. Lithium-Zellmodul nach Anspruch 1 oder 2, **dadurch gekennzeichnet, dass** der Grundkörper (7) ein Biegeblechteil ist.

4. Lithium-Zellmodul nach Anspruch 1 oder 2, **dadurch gekennzeichnet, dass** der Grundkörper ein stranggepresstes Profil ist.

5. Lithium-Zellmodul nach Anspruch 1 oder 2, **dadurch gekennzeichnet, dass** eine Kanalnut (12) durch Fräsen ausgebildet ist.

6. Lithium-Zellmodul nach einem der vorhergehenden Ansprüche, **dadurch gekennzeichnet, dass** die den Lithiumzellen (3) zugewandte Großseite (18) des Grundkörpers (7) eben ausgebildet ist.

7. Lithium-Zellmodul nach einem der vorhergehenden Ansprüche, **dadurch gekennzeichnet, dass** ein Fluidkanal (13, 14) in strömungstechnischer Verbindung mit einem Fluidzulauf- und/oder Fluidablaufanschluss steht.

8. Lithium-Zellmodul nach einem der vorhergehenden Ansprüche, **dadurch gekennzeichnet, dass** das Gehäuse (2) einen lösbar am Grundkörper (7) angeordneten Deckel aufweist.

## Claims

1. Lithium-ion cell module comprising a housing (2) and a plurality of lithium-ion cells (3) arranged in the longitudinal direction (4) of the housing one behind the other in a row inside the housing (2), wherein the housing (2) accommodates a first row of cells (5) and a second row of cells (6), wherein the housing (2) has a base body (7) with a U-shaped cross section which provides a housing bottom (8) and two side walls (9) arranged thereon, wherein the open end faces of the base body (7) are closed by end plates (19) that receive the rows of cells (5, 6) between them, **characterized in that**, for each row of cells (5, 6), a fluid channel (13, 14) running in the longitudinal direction (4) of the housing is integrated into the housing bottom (8), wherein the housing bottom (9) is provided with channel grooves (12) on its large side (17) facing away from the lithium-ion cells (3) for forming the fluid channels (13, 14), which channel grooves are sealed in a fluid-tight manner by corresponding covers (16), wherein a cover (16) is a strip configured corresponding to the channel groove (12) to be sealed, wherein each channel groove (12) is provided with longitudinally extending shoulder edges on the groove opening side, whereby channel grooves (12) are enlarged in the transverse direction on the groove opening side, wherein the cover (16) provided for each channel groove (12) comes to lie in this enlargement and is supported on the shoulder edges, wherein the shoulder edges have a geometric configuration in the height direction which corresponds to the thickness of the cover (16).

2. Lithium-ion cell module according to claim 1, **characterized in that** a cross channel (15) is integrated into the housing bottom (8) which fluidically connects the two fluid channels (13, 14) to each other.

3. Lithium-ion cell module according to claim 1 or 2, **characterized in that** the base body (7) is a bending sheet metal part.

4. Lithium-ion cell module according to claim 1 or 2, **characterized in that** the base body is an extruded profile.

5. Lithium-ion cell module according to claim 1 or 2, **characterized in that** a channel groove (12) is formed by milling.

6. Lithium-ion cell module according to any one of the preceding claims, **characterized in that** the large side (18) of the base body (7) facing the lithium-ion cells (3) is designed to be flat.

7. Lithium-cell module according to any one of the preceding claims, **characterized in that** a fluid channel (13, 14), is in fluid communication with a fluid inlet and/or fluid outlet port.

8. Lithium-cell module according to any one of the preceding claims, **characterized in that** the housing (2) includes a lid which is detachably arranged on the base body (7).

## Revendications

1. Module de pile au lithium, comprenant un boîtier (2) et une pluralité de piles au lithium (3) disposées dans une direction longitudinale (4) du boîtier les unes derrière les autres en une rangée à l'intérieur du boîtier (2), dans lequel le boîtier (2) loge une première rangée de piles (5) et une deuxième rangée de piles (6), dans lequel le boîtier (2) comporte un corps de base (7) à section transversale en forme de U qui forme un fond de boîtier (8) et deux parois latérales (9) disposées sur celui-ci, les faces d'extrémité ouvertes du corps de base (7) étant fermées par des plaques d'extrémité (19) qui reçoivent entre elles les rangées de piles (5, 6), **caractérisé en ce que**, pour chaque rangée de piles (5, 6), un canal de fluide (13, 14) s'étendant dans la direction longitudinale (4) du boîtier est intégré dans le fond de boîtier (8), le fond de boîtier (9) étant muni, sur son grand côté (17) opposé aux piles au lithium (3), de rainures de canal (12) destinées à former les canaux de fluide (13, 14), lesquelles rainures de canal sont obturées de manière étanche aux fluides par des couvercles correspondants (16), un couvercle (16) étant une bande configurée de manière correspondante à la rainure de canal (12) à obturer, chaque rainure de canal (12) étant pourvue de bords d'épaulement s'étendant longitudinalement du côté de l'ouverture de la rainure, de sorte que les rainures de canal (12) sont élargies dans la direction transversale du côté de l'ouverture de la rainure, le couvercle (16) prévu pour chaque rainure de canal (12) venant se loger dans cet élargissement et s'appuyant sur les bords d'épaulement, les bords d'épaulement présentant une configuration géométrique dans le sens de la hauteur qui correspond à l'épaisseur du couvercle (16).

2. Module de pile au lithium selon la revendication 1, **caractérisé en ce qu'**un canal transversal (15) est intégré dans le fond de boîtier (8), lequel canal transversal reliant fluidiquement les deux canaux de fluide (13, 14) l'un à l'autre.

3. Module de pile au lithium selon la revendication 1 ou 2, **caractérisé en ce que** le corps de base (7) est une pièce en tôle pliée.

4. Module de pile au lithium selon la revendication 1 ou 2, **caractérisé en ce que** le corps de base est un profilé extrudé.

5. Module de pile au lithium selon la revendication 1 ou 2, **caractérisé en ce qu'**une rainure de canal (12) est formée par fraisage.

6. Module de pile au lithium selon l'une quelconque des revendications précédentes, **caractérisé en ce que** le grand côté (18) du corps de base (7) tourné vers les piles au lithium (3) est conçu pour être plat.

7. Module de pile au lithium selon l'une quelconque des revendications précédentes, **caractérisé en ce qu'**un canal de fluide (13, 14) est en communication fluidique avec un orifice d'entrée de fluide et/ou un orifice de sortie de fluide.

8. Module de pile au lithium selon l'une quelconque des revendications précédentes, **caractérisé en ce que** le boîtier (2) comprend un couvercle qui est disposé de manière amovible sur le corps de base (7).
